# EUROPÄISCHE PATENTSCHRIFT

(11) **EP 1 551 661 B1**
(45) Veröffentlichungstag und Bekanntmachung des Hinweises auf die Patenterteilung: **24.05.2006**
(21) Anmeldenummer: 03753506.9
(22) Anmeldetag: 04.10.2003
(51) Int. Cl.: B60K 17/22, F16D 3/10, B61C 9/48

(54) **WELLENSTRANG, INSBESONDERE GELENKWELLE UND HOMOKINETISCHER DREHGESTELLANTRIEB FÜR SCHIENENFAHRZEUGE**
SHAFTING, ESPECIALLY A CARDAN SHAFT, AND HOMOKINETIC BOGIE DRIVE SYSTEM FOR RAIL VEHICLES
LIGNE D'ARBRES, NOTAMMENT ARBRE DE TRANSMISSION ET ENTRAINEMENT A BOGIES HOMOCINETIQUE POUR VEHICULES FERROVIAIRES

(30) Priorität: 19.10.2002 DE 10248833
(43) Veröffentlichungstag der Anmeldung: 13.07.2005
(73) Patentinhaber: Voith Turbo GmbH & Co. KG, 89522 Heidenheim (DE)
(72) Erfinder: LINDENTHAL, Hans, 89522 Heidenheim (DE)
(74) Vertreter: Dr. Weitzel & Partner
(86) Internationale Anmeldenummer: PCT/EP2003/011003
(87) Internationale Veröffentlichungsnummer: WO 2004/037596

(56) Entgegenhaltungen:
- EP-A- 0 480 159
- EP-A- 1 065 120
- DE-A- 10 023 372
- DE-C- 4 412 445

## Beschreibung

Die Erfindung betrifft einen Wellenstrang, insbesondere eine Gelenkwelle, im einzelnen mit den Merkmalen aus dem Oberbegriff des Anspruchs 1; ferner ein Antriebssystem, insbesondere einen homokinetischen Drehgestellantrieb für Schienenfahrzeuge.

Aus Volkmar Kinzer: "Kfz-Kraftübertragung", Transpress, VEB Verlag für Verkehrswesen, Berlin, 5. Auflage, 1977, S. 145 - 162 sind die Grundprobleme beim Einsatz von Kreuzgelenken zur Verbindung zweier geneigt zueinander angeordneter Wellen bekannt. Bei einfachen Kreuzgelenkanordnungen bewegt sich dabei bei gleichförmiger Winkelgeschwindigkeit der Antriebswelle die getriebene Welle ungleichförmig mit einer veränderlichen Winkelgeschwindigkeit. Die Amplitude und die sinusförmigen Schwankungen der Winkelgeschwindigkeit bzw. des Vor- und Nacheilwinkels der Abtriebswelle sind dabei stark vom Beugewinkel abhängig. Diese Eigenschaft eines Kreuzgelenkes wird auch als Kardanfehler bezeichnet und muß bei der Anbindung und Dimensionierung von Gelenkwellen mit berücksichtigt werden. Insbesondere führt die auftretende ungleichförmige Übertragung einer eingeleiteten konstanten Winkelgeschwindigkeit in Folge der Gefahr einer Erregung von Drehschwingungen durch die laufende Verzögerung und Beschleunigung der umlaufenden Massen zu größeren Beanspruchungen und vorzeitigem Verschleiß der Wellenlager sowie der Bauteile des Gelenkes selbst. Durch Verwendung eines zweiten Kreuzgelenkes in einem Wellenstrang kann die Ungleichförmigkeit der Abtriebsbewegung aufgehoben werden, d. h. die Ungleichförmigkeit des ersten Gelenkes wird durch die Ungleichförmigkeit eines zweiten Gelenkes kompensiert. Die durch diese Kopplung entstehenden Gelenkwellen, siehe z.B. EP-A-1 065 120, sind durch zwei Kreuzgelenke charakterisiert, welche über ein Mittenteil, welches auch als Zwischenwelle bezeichnet wird, miteinander gekoppelt sind. Das Mittenteil ist dabei in der Regel mehrteilig, vorzugsweise zweiteilig, ausgeführt, wobei die zwei Mittenteil-Teilelemente über eine Welle-Nabe-Verbindung miteinander gekoppelt sind. Die Kopplung erfolgt dabei in Umfangsrichtung drehfest und vorzugsweise in axialer Richtung verschiebbar. Um den vollkommenen Ausgleich der Ungleichförmigkeit von Gelenkwellen zu erzielen, die in einer Ebene gebeugt sind, d. h. in Z- oder W-Anordnung angeordnet sind, müssen jedoch noch folgende Forderungen hinsichtlich der Anbindung an Anschlußelemente erfüllt werden:
1. Die beiden Gelenke müssen um 90° gegeneinander verdreht sein, d. h. die beiden Gabeln der Zwischenwelle bzw. des Mittenteiles müssen in einer Ebene liegen.
2. Die Beugewinkel β₁ und β₂ müssen gleich groß sein.

Nur diese Bedingungen stellen sicher, daß das zweite, abtriebsseitig angeordnete Kreuzgelenk mit einer Phasenverschiebung von 90° arbeitet und den Kardanfehler des ersten Kreuzgelenkes vollständig kompensiert. Wird eine der Bedingungen nicht erfüllt, arbeitet die Gelenkwelle nicht mehr homokinetisch. Zunehmend sind jedoch Einsatzfälle für derartige Gelenkwellen zur Leistungsübertragung in Antriebssträngen bekannt, für welche in der konkreten Einbausituation die Z- oder W-Anordnung, welche die gewünschte Gleichförmigkeit der Drehbewegung am An- und Abtriebsflansch garantiert, nicht mehr gegeben ist. Dies gilt insbesondere für den Einsatz in Antriebssträngen von Schienenfahrzeugen, vorzugsweise zum Antrieb von in Drehgestellen gelagerten Rädern. Derartige Antriebssysteme können unterschiedlich aufgebaut sein. Diese zeichnen sich jedoch in der Regel durch das Vorhandensein einer Antriebsmaschine in Form einer Verbrennungskraftmaschine, ein mit dieser gekoppeltes Getriebe sowie die Realisierung der Verbindung zwischen Getriebe und den anzutreibenden Rädern, welche in einem Drehgestell gelagert sind, über einen Wellenstrang in Form einer Gelenkwelle aus. Entsprechend der Anordnung des Getriebes ergeben sich für die Kopplung mit dem Drehgestell, insbesondere den in diesem gelagerten Rädern verschiedene Möglichkeiten, beispielsweise über ein Radsatzgetriebe. Die einzelnen Anordnungsmöglichkeiten sind jedoch zum größten Teil dadurch charakterisiert, daß eine Parallelität zwischen dem An- und Abtriebsflansch nicht mehr gegeben ist. Ferner ist bei derartigen Antriebssystemen zu berücksichtigen, daß die Anbindung am Drehgestell bezogen auf die Fahrzeugachse, welche im Neutralzustand, d. h. bei nicht ausgelenktem Drehgestell durch die Symmetrieachse in Fahrtrichtung charakterisiert ist, einer Winkeländerung unterworfen ist. Dies ist insbesondere beim Durchfahren von Kurven der Fall, bei welchem eine Auslenkung des Drehgestells in Abhängigkeit von der Kurvenart - Rechts- oder Linkskurve - und des Kurvenradius erfolgt. Zwar ist es bekannt, den Kardanfehler durch das "Verstecken" der Gabel zu kompensieren. Dies bedeutet jedoch, daß die Elemente des Mittenteils bereits zueinander mit geringfügigem Versatz in Umfangsrichtung verdreht eingebaut werden. Die Gabeln mit den Kreuzachsen liegen dann nicht mehr in einer Ebene. Bei richtiger Zuordnung gleicht die so erzeugte Phasenverschiebung dann den Kardan-Fehlerwinkel aus. Allerdings löst diese Ausführung nicht die Probleme bei Leistungsübertragung in einem Antriebsstrang für Schienenfahrzeuge, insbesondere für den Antrieb von in einem Drehgestell gelagerten Rädern aufgrund der räumlichen Beugung und der zeitweisen Änderung der Beugewinkel.

Der Erfindung liegt daher die Aufgabe zugrunde, eine Gelenkwelle für den Einsatz in unterschiedlichsten Antriebssystemen zu schaffen, welche immer eine homokinetische Leistungsübertragung zwischen dem an- und abtriebsseitigen Flansch bzw. Anschlußteil der Gelenkwelle ermöglicht, unabhängig von der Einbausituation und den sich im Antriebsstrang während des Betriebes einstellenden Verhältnissen. Die erfindungsgemäße Lösung soll dabei in besonders vorteilhafter Weise die Probleme beim Einsatz von Gelenkwellen in Antriebssystemen für Schienenfahrzeuge, insbesondere zum Antrieb von in Drehgestellen gelagerten Rädern, lösen. Die erfindungsgemäße Lösung soll sich dabei nach Möglichkeit durch einen geringen zusätzlichen konstruktiven Aufwand auszeichnen.

Die erfindungsgemäße Lösung wird durch die Merkmale des Anspruchs 1 charakterisiert. Ein erfindungsgemäß gestaltetes Antriebssystem für Schienenfahrzeuge, insbesondere zum Antrieb von in einem Drehgestell gelagerten Rädern in Schienenfahrzeugen, ist durch die Merkmale des Anspruchs 10 charakterisiert. Vorteilhafte Ausgestaltungen und Weiterentwicklungen sind jeweils in den Unteransprüchen wiedergegeben.
Der erfindungsgemäß gestaltete Wellenstrang, insbesondere die Gelenkwelle, umfaßt zwei Kreuzgelenke, die über einen Mittenteil miteinander verbunden sind. Das erste Kreuzgelenk dient dabei der Kopplung mit einem Antrieb, das zweite Kreuzgelenk der Kopplung mit der Abtriebsseite. Der Mittenteil ist in der Regel mehrteilig ausgeführt, vorzugsweise zweiteilig, wobei beide Mittenteil-Teilelemente über eine Welle-Nabe-Verbindung miteinander gekoppelt sind. Diese dient der Realisierung einer drehfesten Verbindung in Umfangsrichtung und der axialen Verschiebbarkeit der Mittenteil-Teilelemente zueinander in Längsrichtung. Dem Mittenteil ist erfindungsgemäß zum Ausgleich des Kardanfehlers ein Stellgetriebe zugeordnet. Dieses dient der Verdrehung der Endbereiche des mit dem abtriebsseitigen Kreuzgelenk gekoppelten Mittenteil-Teitelementes gegeneinander, d. h. des Bereiches des Mittenteil-Teilelementes, in welchem die Welle-Nabe-Verbindung mit dem anderen zweiten Mittenteil-Teilelement realisiert wird und des Endbereiches, welcher mit dem zweiten Kreuzgelenk gekoppelt ist. Durch diese Verdrehung des mit dem abtriebseitigen Kreuzgelenk gekoppelten Endbereiches des Mittenteil-Teilelementes wird es möglich, die beiden Kreuzgelenke - erstes Kreuzgelenk und zweites Kreuzgelenk - in eine Ebene oder zwei zueinander senkrecht stehende Ebenen zurückzuversetzen. Die jeweiligen mit dem Mittenteil gekoppelten Gelenkgabeln liegen dabei in einer Ebene. Die Beugewinkel β₁ und β₂ zwischen der Rotationsachse, welche der durch das Mittenteil beschreibbaren und sich durch den Schnittpunkt der Zapfenachsen der Zapfenkreuze der beiden Kreuzgelenke erstreckenden Achse entspricht, und der sich durch die Lage der An- bzw. Abtriebswelle, welche mit dem ersten bzw. zweiten Kreuzgelenk gekoppelt sind, ergebenden Wellenachsen, werden ebenfalls aneinander angepaßt. Dadurch wird es möglich, die sich ansonsten einstellende auftretende ungleichförmige Übertragung einer eingeleiteten konstanten Winkelgeschwindigkeit ω₁ am ersten Kreuzgelenk in eine Winkelgeschwindigkeit ω₂ am zweiten abtriebsseitigen Kreuzgelenk aufgrund einer Anregung von Drehschwingungen durch die laufende Verzögerung und Beschleunigung der umlaufenden Massen, insbesondere der mit den beiden Kreuzgelenken gekoppelten Elemente und die sich daraus ergebenden Beanspruchungen und den vorzeitigen Verschleiß der Wellenlager sowie der Bauteile des Gelenks selbst, zu vermeiden. Die Übertragung einer eingeleiteten konstanten Winkelgeschwindigkeit ω₁ am ersten, mit einem Antrieb koppelbaren Kreuzgelenk kann dann durch die Aktion des Stellgetriebes gleichförmig auf das zweite Kreuzgelenk übertragen werden, unter der Voraussetzung, daß das Stellgetriebe den Versatzwinkel zwischen den beiden mit dem ersten Kreuzgelenk und dem zweiten Kreuzgelenk drehfest gekoppelten Gelenkgabeln dahingehend ausgleicht, daß beide mit dem Mittenteil gekoppelte Gabeln in einer Ebene liegen. Diese gemeinsame Ebene wird durch die durch die Verbindung der Schnittpunkte der Zapfenachsen der einzelnen Kreuzgelenke bestimmte Mittenachse sowie die Zapfenachse der mit dem Mittenteil gekoppelten Gelenkgabel des ersten Kreuzgelenkes verlaufenden Ebene charakterisiert. Der Ausgleich des Versatzwinkels γ, welcher den Winkel zwischen den durch die Gelenkgabeln der Kreuzgelenke und die Mittenachse bestimmten Ebenen zueinander charakterisiert, erfolgt dabei um maximal 10°, so daß eine eindeutige Zuordnung bezüglich der Verdrehrichtung und des Verdrehwinkels sowie der Größe des Verdrehwinkels gegeben ist. Dieser ist immer kleiner gleich einem Winkel von (90° - 80°).

Mit der erfindungsgemäßen Lösung wird es möglich, für sich verändernde Einbausituationen, insbesondere beim Einsatz in Antriebssträngen von Schienenfahrzeugen, vorzugsweise zum Antrieb von in Drehgestellen gelagerten Rädern, standardisiert vorgefertigte Gelenkwellen mit integriertem Stellgetriebe zu verwenden, welche den Kardanfehler auch in den unterschiedlichen Einbausituationen bei unterschiedlichsten Randbedingungen ausgleichen können. Ferner kann gerade für diese Antriebssysteme mit der erfindungsgemäßen Lösung eine gleichförmigere Übertragung der Winkelgeschwindigkeit auf die anzutreibenden Räder erzielt werden als in Einbausituation mit klarer Z- oder W-Anordnung, wobei der Antriebsstrang, insbesondere die verwendeten Wellenstränge, keiner größeren Beanspruchung unterworfen werden. Auch kann dem vorzeitigen Verschleiß der Wellenlager sowie der Bauteile des Gelenkes vorgebeugt werden. Die erfindungsgemäße Lösung führt damit zu einer höheren Verfügbarkeit der Antriebsstränge mit derartigen Wellensträngen, insbesondere Gelenkwellen. Reparaturarbeiten und die damit verbundenen Ausfallzeiten können somit erheblich reduziert werden, was sich betriebswirtschaftlich positiv auswirkt.

Die Zuordnung des Stellgetriebes zum Mittenteil erfolgt dabei
a) im Mittenteil oder
b) am Außenumfang des Mittenteiles.

Die erste Lösung bietet den Vorteil, daß kein zusätzlicher Bauraum in Umfangrichtung vorzusehen ist.

Die Anordnung der einzelnen Elemente des Stellgetriebes erfolgt, bezogen auf die axiale Erstreckung der Mittenteil-Teilelemente, vorzugsweise zwischen beiden.

Bezüglich der konkreten Ausgestaltung des Stellgetriebes besteht eine Mehrzahl von Möglichkeiten. Der Ausgleich des Versatzwinkels bei Änderung der Beugewinkel erfolgt dabei gesteuert in Abhängigkeit der Größe des Versatzwinkels γ.

Erfindungsgemäß erfolgt der Ausgleich des Versatzwinkels gesteuert, d. h. das Stellgetriebe ist mit einem Antrieb gekoppelt, welcher entsprechend des gewünschten auszugleichenden Versatzwinkels eine Verdrehung über die axiale Erstreckung bzw. Verdrillung des zweiten, d. h. mit dem abtriebsseitig angeordneten Kreuzgelenk drehfest gekoppelten Mittenteil-Teilelementes, realisiert. Der Eingang des Stellgetriebes ist dabei mit einem Antrieb gekoppelt, welcher frei von einer Kopplung mit den Mittenteil-Teilelementen ist. Der Ausgang des Stellgetriebes ist mit dem mit dem abtriebsseitigen Kreuzgelenk drehfest gekoppelten Mittenteil-Teilelement drehfest verbunden. Die Verbindung erfolgt vorzugsweise direkt im Verbindungsbereich zwischen dem Mittenteil-Teilelement und dem Kreuzgelenk, d. h. der entsprechenden Gelenkgabel, die mit dem Mittenteil verbunden ist. Der Antrieb kann vielgestaltig ausgeführt sein. Vorzugsweise erfolgt dieser
a) elektrisch oder
b) hydraulisch oder
c) pneumatisch oder
d) mechanisch oder
e) eine Kombination der vorher genannten Möglichkeiten a) bis d).

Als Antriebe - elektrisch, pneumatisch oder hydraulisch - werden vorzugsweise Stellmotoren verwendet. Deren Rotoren sind direkt oder indirekt drehfest mit dem Eingang des Stellgetriebes verbunden. Bei elektrischen Stellmotoren erfolgt die Leistungsversorgung in Abhängigkeit von der gewählten Art der elektrischen Maschine, beispielsweise über Schleifringe, welche an einem der beiden Mittenteil-Teilelemente angeordnet bzw. gelagert sind.
Hydraulische Antriebskonzepte können über sogenannte Flügelzellenpumpen/motoren oder Axial- und Radialkolbenpumpen bzw. -motoren realisiert werden. Diese sind vorzugsweise ebenfalls in der Gelenkwelle, insbesondere dem Mittenteil, integriert. Für den Antrieb selbst werden immer Ausführungen gewählt, welche im Antriebsstrang, in welchen ein erfindungsgemäß gestalteter Wellenstrang zum Einsatz gelangen kann, ohnehin schon Verwendung finden oder aber für welche die Energieversorgung kein zusätzliches Problem bedeutet. Für die Ausgestaltung des Stellgetriebes besteht eine Vielzahl von Möglichkeiten, wobei dieses keiner besonderen Dimensionierung unterliegen muß, sondern lediglich eine gewünschte Verdrehbewegung realisieren können muß. Zu diesem Zweck ist der Gelenkwelle vorzugsweise eine Steuervorrichtung zugeordnet, umfassend wenigstens eine Steuereinrichtung, die mit wenigstens jeweils einer Erfassungseinrichtung zur Erfassung einer, den Versatzwinkel je wenigstens mittelbar charakterisierenden Größe wenigstens mittelbar gekoppelt ist und die einen Stellgrößenbildner beinhaltet, welcher den Versatzwinkel in eine entsprechende Stellgröße zur Ansteuerung des Stellgetriebes zur Realisierung einer Verdrehbewegung bzw. Verdrillung in der Größenordnung des Versatzwinkels umsetzt. Vorzugsweise sind zwei Einrichtungen zur Erfassung der den Versatzwinkel wenigstens mittelbar charakterisierenden Größe vorgesehen. Bei diesen handelt es sich um entsprechende Sensoren, welche die einzelnen Beugewinkel β₁ bzw. β₂ zwischen der mit dem antriebsseitigen Kreuzgelenk gekoppelten Welle oder dem Anschlußelement und der mit dem abtriebsseitigen Kreuzgelenk gekoppelten Welle oder Anschlußelement aufnehmen bzw. die diesen Winkel wenigstens mittelbar charakterisierenden Größen erfassen. Aus den Beugewinkeln β₁ bzw. β₂ wird dann der Versatzwinkel γ gebildet, wobei der Stellgrößenbildner durch die entsprechende Zuordnung eine Ansteuerung des Antriebes, welcher drehfest mit dem Eingang des Stellgetriebes gekoppelt ist, vornimmt. In Abhängigkeit des gewählten Antriebes fungiert als Stellgröße wenigstens eine elektrische Größe, beispielsweise die Stromstärke, oder beispielsweise eine hydraulische Größe in Form eines Druckes.
Die Lagerung des Antriebes und des Eingangs des Stellgetriebes kann ortsfest an einem der beiden Mittenteil-Teilelementen erfolgen, vorzugsweise am abtriebsseitigen Mittenteil-Teilelement. Entscheidend ist, daß keine direkte drehfeste Verbindung zwischen Antrieb- und Mittenteil-Teilelement und Eingang des Stellgetriebes und Mittenteil-Teilelement erfolgt.

Die Ausgestaltung des Stellgetriebes ist keinen Beschränkungen unterworfen. Grundsätzlich können dazu zwei unterschiedliche Lösungsansätze für die Funktionsweise der Stellgetriebe unterschieden werden. Gemäß einem ersten Lösungsansatz ist das Stellgetriebe zwischen den beiden Mittenteil-Teilelementen angeordnet, wobei der Antrieb durch geradlinige Bewegung eines am vorzugsweise abtriebsseitigen Mittenteil-Teilelement gelagerten Hülsenelementes erfolgt. Das Stellgetriebe ist dazu als Koppelgetriebe zur Umwandlung einer geradlinigen in eine Drehbewegung ausgeführt. Dieses weist einen Eingang und einen Ausgang auf, wobei der Eingang mit dem mit dem abtriebsseitigen Mittenteil-Teilelement verbundenen Hülsenelement in Verbindung steht, während der Ausgang mit dem mit dem abtriebsseitigen Kreuzgelenk drehfest verbundenen Mittenteil-Teilelement gekoppelt ist. Die Koppelung des Einganges erfolgt vorzugsweise in dem von der Welle-Nabe-Verbindung freien Bereich.

Gemäß einem zweiten Lösungsansatz wird am Antrieb eine Drehbewegung vorgegeben, die über das Stellgetriebe übertragen wird. Das heißt, eine Umlenkung des Kraftflusses ist nicht unbedingt erforderlich. Die Einleitung erfolgt koaxial oder parallel zum Ausgang. In beiden genannten Fällen erfolgt die Anbindung des Ausganges vorzugsweise im oder nahe beim Koppelbereich des abtriebsseitigen Mittenteil-Teilelementes mit der Gelenkgabel. Die Kopplung bzw. Verbindung des Ausganges des Stellgetriebes mit dem mit dem abtriebsseitigen Kreuzgelenk drehfest gekoppelten Mittenteil-Teilelement im Bereich der axialen Erstreckung des anderen, abtriebsseitigen Mittenteil-Teilelementes erfolgt, welcher frei von der drehfesten Kopplung, insbesondere der Welle-Nabe-Verbindung zwischen den beiden Mittenteil-Teilelementen ist. Vorzugsweise erfolgt die Verbindung des Ausganges mit dem mit dem abtriebsseitigen Kreuzgelenk drehfest gekoppelten Mittenteil-Teitelement im Bereich der Verbindung des Mittenteil-Teilelementes mit dem abtriebsseitigen Kreuzgelenk. Dadurch wird sicher gestellt, daß die durch Wirkung des Stellgetriebes bedingte Verdrehung einen größtmöglichen Verdrehwinkel an der mit dem Mittenteil-Teilelement gekoppelten Gelenkgabel bewirkt.

Das Stellgetriebe kann als Koppelgetriebe, insbesondere Umlenkgetriebe mit winkliger oder paralleler oder koaxialer Anordnung von Eingang und Ausgang oder beispielsweise Kurvengetriebe ausgeführt sein. Der Eingang des Stellgetriebes ist dabei mit dem Antrieb verbunden, während der Ausgang mit dem abtriebsseitig angeordneten Kreuzgelenk, insbesondere dem mit diesem drehfest gekoppelten Mittenteil-Teilelement, verbunden ist.

Die Ausführung als Kurvengetriebe kann dabei im einfachsten Fall über eine Kulissenführung realisiert werden, welche an einem der beiden Mittenteil-Teilelemente ortsfest gelagert ist und in welchem wenigstens ein, mit dem jeweils anderen Mittenteil-Teilelement drehfest gekoppelter Vorsprung geführt wird. Die Kulissenführung kann sich dabei am
a) mit dem antriebsseitig angeordneten Kreuzgelenk drehfest verbundenen Mittenteil-Teilelement oder
b) mit dem abtriebsseitig angeordneten Kreuzgelenk drehfest verbundenen Mittenteil-Teilelement des Mittenteils
abstützen.

Das Koppelgetriebe in Form des Umlenkgetriebes kann ferner eine Zahnstange umfassen, welche mit dem in Längsrichtung verschiebbaren Bauelement - mit dem antriebsseitigen Kreuzgelenk drehfest gekoppelten Mittenteil-Teilelement oder dem mit dem abtriebsseitigen Kreuzgelenk drehfest gekoppelten Mittenteil-Teilelement - eine bauliche Einheit bildet bzw. verbunden ist. Diese wirkt auf ein winklig, vorzugsweise senkrecht zur Verschiebungsrichtung gelagertes Stirn- oder Kegelrad, welches mit einem, in der Gelenkachse bzw. der durch das Mittenteil charakterisierten Mittenachse drehbar gelagerten Kegelrad kämmt, das den Abtrieb des Stellgetriebes bildet und mit dem mit dem abtriebsseitig angeordneten Kreuzgelenk drehfest gekoppelten Mittenteil-Bauelement drehfest verbunden ist. Durch die konstruktive Auslegung, insbesondere die gewählten Übersetzungen, kann die Relativbewegung als Verstellbewegung in axialer Richtung in eine Drehbewegung in Umfangsrichtung umgewandelt werden und damit der entsprechende gewünschte Versatzwinkel ausgeglichen werden. Der Ausgleich erfolgt in all diesen Fällen durch Verdrillung des zweiten Mittenteil-Teilelementes über seine axiale Erstreckung in Richtung des abtriebsseitigen Kreuzgelenkes hin betrachtet, da die drehfeste Verbindung durch die Welle-Nabe-Verbindung zwischen den Mittenteil-Teilelementen von der Ausgleichsbewegung zum Ausgleich des Versatzwinkels nicht aufgehoben wird.

Die Ausführungen gemäß dem zweiten Lösungsansatz sind durch die koaxiale Anordnung vom Eingang des Stellgetriebes und des Antriebes charakterisiert. Nachfolgend werden einige besonders dafür geeignete Ausführungen beschreiben.

Gemäß einer besonders vorteilhaften Ausgestaltung ist dieses in Form eines sogenannten Harmonic-Drive-Getriebes ausgeführt. Bei dieser Getriebebezeichnung handelt es sich um die Bezeichnung eines Spezialgetriebes, welches aus wenigstens drei Baueinheiten besteht, einem elliptischen Scheibenelement mit zentrischer Nabe und aufgezogenen, elliptisch verformbarem Spezialkugellager, einem zylindrisch verformbaren büchsenartigen Element mit Außenverzahnung und einem zylindrischen ringförmigen Element mit Innenverzahnung. Vorzugsweise sind das zylindrische verformbare büchsenartige Element und das scheibenförmige Element aus Stahl gefertigt. Den Eingang des Stellgetriebes bildet dabei das elliptische scheibenförmige Element mit zentrischer Nabe, welches mit dem Antrieb wenigstens mittelbar drehfest gekoppelt ist. Das zylindrische ringförmige Element mit Innenverzahnung bildet dabei den Abtrieb des Stellgetriebes, und ist drehfest mit dem mit dem abtriebsseitig angeordneten Kreuzgelenk drehfest gekoppelten Mittenteil-Teilelement verbunden. Gemäß einer besonders vorteilhaften Ausgestaltung ist dann dieses Mittenteil-Teilelement als Hohlwelle ausgeführt, wobei die Funktion des zylindrischen ringförmigen Elementes mit Innenverzahnung von diesem übernommen wird, indem die Innenverzahnung in diesem Element integriert ist. Das elliptische scheibenförmige Element mit zentrischer Nabe verformt dabei über das Kugellager das zylindrisch verformbare büchsenartige Element mit Außenverzahnung, welches sich in den gegenüberliegenden Bereichen der großen Ellipsenachse mit dem innenverzahnten zylindrischen Ring, insbesondere dem Mittenteil-Teilelement, in Eingriff befindet. Mit Verdrehung des elliptischen scheibenförmigen Elementes verlagert sich die große Ellipsenachse und damit der Zahneingriffsbereich. Das zylindrische verformbare büchsenartige Element besitzt in der Regel eine geringere Anzahl an Zähnen als das zylindrische ringförmige Element mit Innenverzahnung. Die sich ergebende Zahndifferenz zwischen den Verzahnungen des büchsenartig ausgestalteten Elementes mit Außenverzahnung und dem ringförmigen Element mit Innenverzahnung beträgt dabei x, so daß bei einer Umdrehung des Antriebes bzw. Eingangsstellgetriebes ein Verdrehwinkel am Ausgang, d. h. am mit dem abtriebsseitigen Kreuzgelenk drehfest gekoppelten Mittenteil-Teilelement, in der Größenordnung von x, mit x beispielsweise maximal 10, realisiert wird. Wird beispielsweise das zylindrisch verformbare büchsenartige Element mit einer Außenverzahnung mit zwei Zähnen weniger als die Innenverzahnung am zylindrischen ringförmigen Element ausgeführt, d. h. x = 2, vollzieht sich bereits nach einer halben Umdrehung des elliptischen scheibenförmigen Elementes mit zentrischer Nabe, d. h. des Einganges des Stellgetriebes, eine Relativbewegung zwischen dem zylindrisch verformbaren büchsenartigen Element und dem zylindrischen ringförmigen Element mit Innenverzahnung um die Größe eines Zahnes und nach einer ganzen Umdrehung um die Größe zweier Zähne. Der Verdrehwinkel ergibt sich dabei als Funktion der Verzahnungsdifferenz zwischen dem zylindrisch verformbaren büchsenartigen Element und dem zylindrischen ringförmigen Element, d. h. zwischen Außen- und Innenverzahnung sowie der Anzahl der Umdrehungen des Einganges des Stellgetriebes.

Eine weitere Ausführung besteht in der Integration eines Stellgetriebes in Form eines Planetenradsatzes in dem Mittenteil, wobei auch hier der Abtrieb bzw. Ausgang des Stellgetriebes drehfest mit dem mit dem abtriebsseitigen Kreuzgelenk drehfest gekoppelten Mittenteil-Teilelementes verbunden ist, während der Eingang mit dem Antrieb verbunden wird. Die Ausgestaltung des Planetenradsatzes bzw. Planetengetriebes kann vielgestaltig erfolgen, wobei die einzelnen Elemente - Eingang und Ausgang - von beliebigen Getriebeelementen, d. h. Sonnenrad, Hohlrad, Steg gebildet werden können. Durch eine entsprechende Kopplung mehrerer Planetenradsätze miteinander kann eine gewünschte Über- oder Untersetzung hinsichtlich des gewünschten Verdrehwinkels zwischen dem Eingang und dem Ausgang erfolgen. Die konkrete Ausgestaltung hängt dabei von den Einsatzerfordernissen ab und liegt im Ermessen des zuständigen Fachmannes.

Alle hier beschriebenen Arten von Stellgetrieben sind für alle Antriebskonzepte einsetzbar. Entsprechend der Anordnung und Ausgestaltung des Einganges des Stellgetriebes - koaxial oder im Winkel zum Antrieb - kann dieser direkt oder aber über zusätzliche Maßnahmen zur Kraftumlenkung mit diesem verbunden werden.

Der Aufbau des Mittenteils der Gelenkwelle kann ebenfalls vielgestaltig erfolgen. Die beiden beschriebenen Mittenteil-Teilelemente können ferner zusätzlich in weitere Einzelelemente untergliedert sein, die jedoch lediglich durch eine drehfeste Verbindung miteinander gekoppelt sind. Dabei wird eine Baueinheit aus einer Vielzahl von einzelnen drehfest miteinander gekoppelten Elementen, wobei diese Verbindungen frei von der Möglichkeit einer axialen Verschiebung sind, als Mittenteil-Teilelement bezeichnet. Entscheidend ist lediglich, daß diese gesamte Einheit mit einer weiteren zweiten mit dem an- oder abtriebsseitigen Kreuzgelenk drehfest gekoppelten Baueinheit in Form eines zweiten Mittenteil-Teilelementes eine drehfeste Verbindung eingehen, welche jedoch durch die Möglichkeit einer Relativbewegung zueinander in axialer Richtung charakterisiert ist. Eine derartige Welle-Nabe-Verbindung wird in der Regel bei Gelenkwellen durch eine Keilwellenverbindung oder eine Tripode erzeugt.

Eine besonders vorteilhafte Verwendung einer erfindungsgemäß gestalteten Gelenkwelle ergibt sich beim Einsatz in Antriebssträngen für Schienenfahrzeuge, insbesondere beim Einsatz zur Leistungsübertragung in Antriebssträngen zum Antrieb von in Drehgestellen gelagerten Rädern. Bei dieser Art von Antriebssystemen ist eine parallele Anordnung für An- bzw. Abtriebsflansche, d. h. der an- bzw. abtriebsseitig angeordneten Kreuzgelenke, nicht zwangsläufig gegeben, d. h. mitunter lediglich nur im Neutralzustand, d. h. bei nicht ausgelenktem Drehgestell. In allen anderen Betriebszuständen, insbesondere bei Kurvenfahrt, werden sehr hohe Beugungswinkel und unterschiedliche Beugungswinkel für beide Kreuzgelenke erzeugt, die in einem erhöhten Versatzwinkel zwischen beiden Kreuzgelenkebenen resultieren. Die Beugung erfolgt dann nicht in einer Ebene, sondern räumlich. Aufgrund der sich gerade bei Kurvenfahrt ergebenden Bedingungen, da auch die Kurvenradien einen Einfluß auf die Größe der Beugungswinkel ausüben, bietet der Einsatz einer Gelenkwelle mit einem erfindungsgemäßen Stellgetriebe, insbesondere aus betriebswirtschaftlicher Sicht, enorme Vorteile. Insbesondere kann aufgrund der mit der erfindungsgemäß gestalteten Gelenkwelle erzielten gleichförmigen Leistungsübertragung die Beanspruchung der einzelnen an der Leistungsübertragung beteiligten Bauelemente und damit der Verschleiß erheblich reduziert werden, was zu einer Minimierung von Reparatur- und Wartungsarbeiten führt, die wiederum in einer erhöhten Betriebsdauer resultiert.
Die erfindungsgemäße Lösung wird nachfolgend anhand von Figuren erläutert. Darin ist im einzelnen folgendes dargestellt:
- Figuren 1: verdeutlicht in schematisch stark vereinfachter Darstellung den Grundaufbau und die Grundfunktionsweise eines erfindungsgemäß gestalteten homokinetischen Antriebsstranges;
- Figuren 2a und 2b: verdeutlichten in schematisch vereinfachter Darstellung das Grundproblem beim Einsatz von Gelenkwellensträngen zum Antrieb von in Drehgestellen gelagerten Rädern in einem Schienenfahrzeug anhand eines Antriebsstrangs für einen Schienenfahrzeug aus dem Stand der Technik in zwei Funktionszuständen;
- Figur 3: verdeutlicht eine besonders vorteilhafte Ausgestaltung einer erfindungsgemäßen Gelenkwelle mit einem Stellgetriebe in Form eines Harmonic-Drive-Getriebebausatzes und einem elektrischen Antrieb;
- Figur 4: verdeutlicht eine weitere vorteilhafte Ausgestaltung eines homokinetischen Antriebsstranges mit einem Stellgetriebe in Form eines Planetenradgetriebes;
- Figur 5a und 5b: verdeutlichen eine vorteilhafte Ausgestaltung zum gesteuerten Ausgleich des Versatzwinkels mit einem Stellgetriebe in Form eines Kurvengetriebes;
- Figur 6: verdeutlicht eine weitere vorteilhafte Ausgestaltung zum gesteuerten Ausgleich des Versatzwinkels mit einem Stellgetriebe in Form eines Koppelgetriebes zur Umwandlung einer Längs- in eine Drehbewegung.

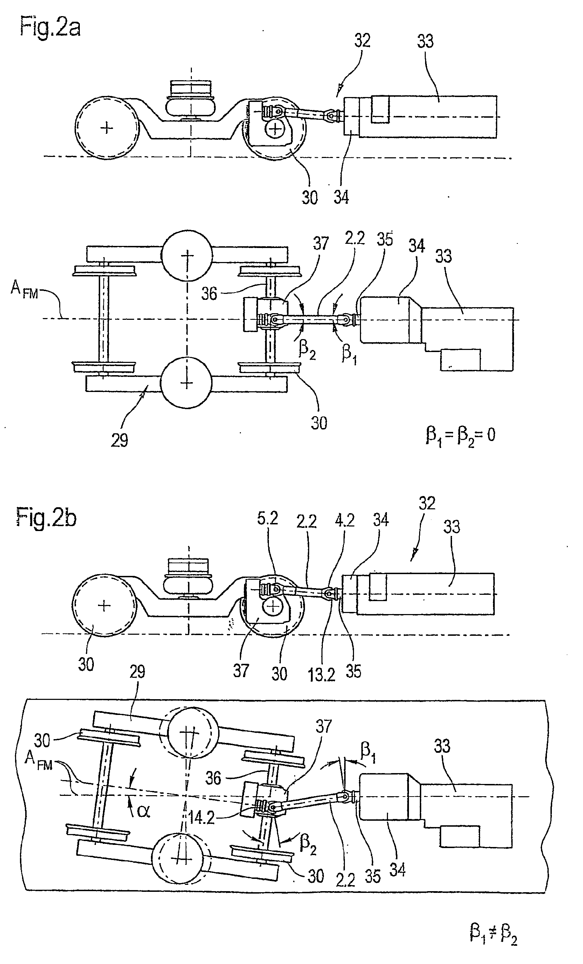

Die Figuren 2a bis 2c verdeutlichen in schematisch vereinfachter Darstellung die Grundproblematik beim Einsatz von Gelenkwellensträngen zum Antrieb von in Drehgestellen 29 gelagerten Rädern 30 in einem Schienenfahrzeug 31 anhand eines Ausschnittes aus einem Antriebsstrang 32 eines Schienenfahrzeuges gemäß dem Stand der Technik. Die Figur 2a verdeutlicht dabei anhand zweier Ansichten, einer Ansicht von rechts und einer Ansicht von oben anhand eines Ausschnittes aus einem Antriebsstrang 32 eines Schienenfahrzeuges die sich einstellenden Verhältnisse an der Gelenkwelle 2.2 in Neutralstellung, d. h. bei nicht ausgelenktem Drehgestell 29. Der Antriebsstrang umfaßt ferner eine Verbrennungskraftmaschine, vorzugsweise in Form eines Dieselmotors 33, ein mit diesem gekoppeltes Getriebe 34, dessen Ausgang 35 über die Gelenkwelle 2.2 mit dem Drehgestell 29, insbesondere der in diesem zum Antrieb der Räder 30 gelagerten Radantriebswelle 36, über eine weitere Getriebeeinheit in Form eines sogenannten Radsatzgetriebes 37 verbunden ist. In dieser Neutralstellung sind die An- und Abtriebsflansche 13.2 bzw. 14.2 der mit dem Mittenteil 6.2 verbundenen Kreuzgelenkanordnungen 4.2 und 5.2 parallel zueinander ausgeführt. In diesem Zustand, d. h. der Neutralstellung, und Ausrichtung des Drehgestell 29 in einem Winkel von 0° gegenüber der Fahrzeug-Mittenachse A_{FM}, welche in Fahrtrichtung verläuft, beträgt der Beugewinkel β₁ des ersten Kreuzgelenkes 4.2, welches mit dem Antrieb gekoppelt ist gleich Null. Dies gilt auch für den zweiten Beugewinkel β₂ für das zweite Kreuzgelenk 5.2, welches mit den anzutreibenden Rädern 30 über das Radsatzgetriebe verbunden ist. Für die Auslenkung aus dem Neutralzustand ergeben sich beispielsweise die in der Figur 2b dargestellten Verhältnisse. Diese sind anhand des Ausschnittes aus dem Antriebsstrang 32 gemäß Figur 2a dargestellt. Für gleiche Elemente werden die gleichen Bezugszeichen verwendet. Daraus ist ersichtlich, daß der Antriebsflansch 13.2 und der Abtriebsflansch 14.2 nicht mehr parallel zueinander ausgeführt sind. Bei diesen handelt es sich immer um die die Anschlußteile bildenden Elemente der Gelenkgabeln der Kreuzgelenkanordnung 4.2 bzw. 5.2, welche jeweils mit dem An- oder Abtrieb gekoppelt sind. Die Beugewinkel β₁ und β₂ stellen sich dabei in Abhängigkeit des Auslenkwinkels α des Drehgestelles 29 gegenüber der Fahrzeugmittenachse A_{FM} ein.
Aus den beiden Ansichten wird ersichtlich, daß es sich hierbei um eine räumliche Beugung handelt.

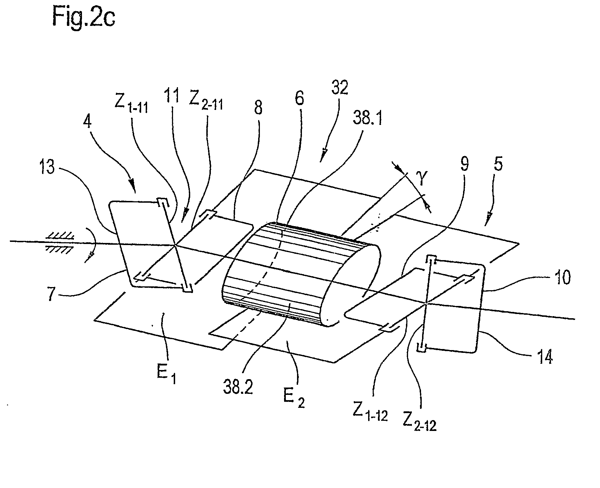

Die Figur 2c verdeutlicht anhand des Ausschnittes aus dem Antriebsstrang 32 in schematisch noch einmal stärker vereinfachter Darstellung die sich in der Figur 2b einstellenden Verhältnisse. Daraus wird ersichtlich, daß die mit dem Mittenteil 6 gekoppelte Gelenkgabel 8 des ersten Kreuzgelenkes 4 und 9 des zweiten Kreuzgelenkes 5 in diesem Zustand nicht in einer gemeinsamen Ebene, sondern in zwei Ebenen E₁ und E₂, liegen. Damit können auch die senkrecht zu diesen angeordneten Gelenkgabeln 7 und 10 nicht in einer gemeinsamen Ebene liegen. Demzufolge sind auch die Zapfenkreuzachsen Z₁₋₁₁, Z₂₋₁₁ für das erste Zapfenkreuz 11 und Z₁₋₁₂ sowie Z₂₋₁₂ für das zweite Zapfenkreuz 12 nicht mehr in einer gemeinsamen Ebene. Der Versatz zwischen den Ebenen E₁ und E₂ wird durch den Versatzwinkel γ charakterisiert. Die Größe des Versatzwinkels γ bestimmt dabei die Drehungleichförmigkeit bei der Leistungsübertragung über die Gelenkwelle 2.2.

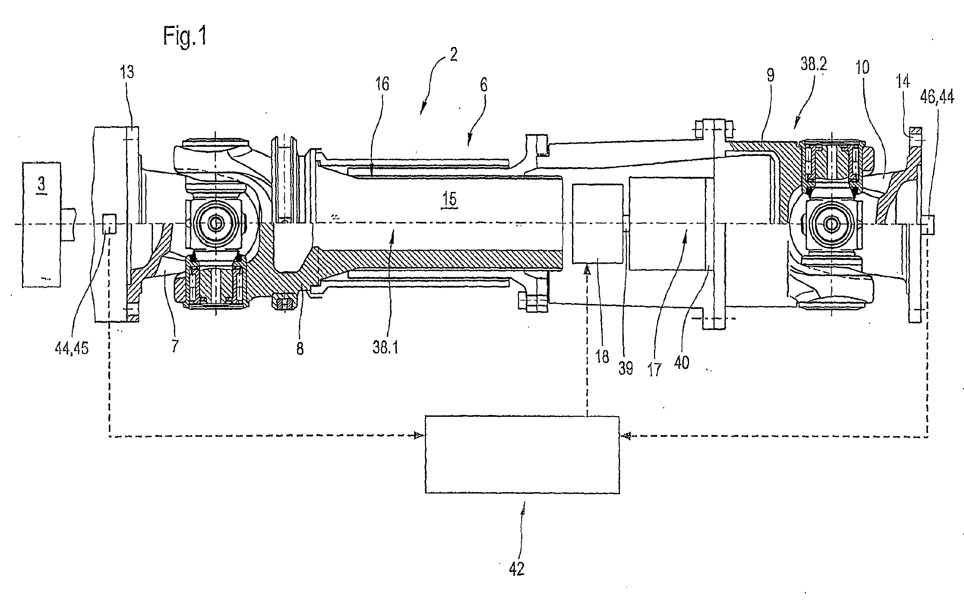

Die Figur 1 verdeutlicht in schematisch stark vereinfachter Darstellung den Grundaufbau und die Grundfunktionsweise eines erfindungsgemäß gestalteten homokinetischen Antriebsstranges 1 in Form einer Gelenkwelle 2. Diese umfaßt ein, wenigstens mittelbar mit einem Antrieb 3 drehfest koppelbares Kreuzgelenk 4, ein mit den anzutreibenden Elementen, d. h. dem Abtrieb, wenigstens mittelbar koppelbares Kreuzgelenk 5 und ein zwischen beiden angeordnetes sogenanntes Mittenteil 6, welches auch als Zwischenwelle bezeichnet wird. Jedes Kreuzgelenk umfaßt dabei zwei Gelenkgabeln - eine erste Gelenkgabel 7 und eine zweite Gelenkgabel 8 - für das Kreuzgelenk 4 und eine erste Gelenkgabel 9 und eine zweite Gelenkgabel 10 für das Kreuzgelenk 5. Die Leistungsübertragung zwischen den beiden Gelenkgabeln 7 und 8 bzw. 9 und 10 erfolgt über Zapfenkreuze 11 bzw. 12. Die erste Gelenkgabel 7 des Kreuzgelenkes 4 ist mit dem Antrieb 3 wenigstens mittelbar koppelbar, wobei die drehfeste Verbindung verschiedenartig ausgeführt sein kann, beispielsweise kann die erste Gelenkgabel 7 mit einem Flansch 13 versehen werden, der entsprechend mit den antriebsseitig angeordneten Elementen drehfest verbindbar ist. Dies gilt in Analogie auch für die zweite Gelenkgabel 10 des Kreuzgelenkes 5, welche mit dem Abtrieb drehfest verbindbar ist. Der Flansch wird hier als Abtriebsflansch 14 bezeichnet. Die zweite Gelenkgabel 8 des ersten Kreuzgelenkes 4 und die erste Gelenkgabel 9 des zweiten Kreuzgelenkes 5 sind drehfest mit dem Mittenteil 6 verbunden. Auch diese drehfeste Kopplung kann beispielsweise über Flansche erfolgen. Bei fest eingestellten und parallelen An- und Abtriebsflanschen 13 und 14, d. h. bei Abweichung von einer Z- oder W-Anordnung, ist gemäß der Stand der Technik ein Ausgleich des Kardanfehlers durch das sogenannte Verstecken der mit dem Mittenteil 6 gekoppelten ersten Gelenkgabel 9 möglich. Das Mittenteil selbst besteht in der Regel aus wenigstens zwei miteinander drehfest verbundenen und in axialer Richtung verschiebbar zueinander angeordneten Mittenteil-Teilelementen 38.1 und 38.2 - einer Welle 15 und einer Nabe 16. Die Welle ist dabei in der Regel als Keilwelle ausgeführt, die Nabe 16 als innenverzahnte Hohlwelle. Dabei ist es egal, ob die Welle 15 oder die Nabe 16 mit dem antriebsseitigem Flansch oder dem abtriebsseitigen Flansch der Gelenkwelle gekoppelt ist. Beim Einsatz in Schienenfahrzeugen zum Antrieb von in Drehgestellen gelagerten Rädern muß der sich bei Durchfahren von Rechts- oder Linkskurven, welche außerdem mit unterschiedlichen Radien ausgeführt sein können, angepaßt werden. Diese Funktion wird erfindungsgemäß durch ein aktives Stellgetriebe 17 erfüllt. Dieses Getriebe kann verschiedenartig ausgeführt sein und bewirkt eine Drehbewegung zwischen den einzelnen Enden des abtriebsseitigen Teilelementes des Mittenteiles 6, d. h. den Nabenenden der Nabe 16, wenn diese mit dem Abtriebsflansch 14 gekoppelt ist, oder aber der Welle 15, wenn diese mit dem Abtriebsflansch 14 gekoppelt ist. Das Stellgetriebe 17 ist dabei zwischen der Welle 15 und der Nabe 16 angeordnet und jeweils dem abtriebsseitigen Mittenteil-Teilelement zugeordnet. Diesem ist zur Realisierung der Verstellung ein Antrieb 18 zugeordnet, welcher entsprechend der Ausgestaltung des Stellgetriebes 17 ebenfalls verschiedenartig ausgeführt sein kann.

Das Stellgetriebe weist einen Eingang 39 und einen Ausgang 40 auf. Entsprechend dem Antrieb, d. h. der Einleitung von Leistung am Eingang 39 ist ein freier, d. h. beliebiger Ausgleich des Versatzwinkels γ möglich. Das Stellgetriebe ist in der Gelenkwelle 2 integriert. Dessen Ausgang 40 ist drehfest mit dem mit dem abtriebsseitig angeordneten Kreuzgelenk 5 drehfest gekoppelten Mittenteil-Teilelement 38.2 verbunden. Der Eingang 39 ist jedoch frei von einer Kopplung mit einem der beiden Mittenteil-Teilelemente, insbesondere dem Mittenteil-Teilelement 38.1. Das Stellgetriebe kann dabei an einem der beiden Mittenteil-Teilelemente 38.1 oder 38.2 oder mit diesen drehfest gekoppelten Elementen gelagert sein. Dies gilt auch für den Antrieb 18. Entscheidend ist lediglich, daß die Verdrehbewegung am abtriebsseitigen Mittenteil-Teilelement 38.2 frei, d.h. beliebig, einstellbar ist. Zum Einbringen von Leistung ist der Eingang 39 mit einem Antrieb 18 verbunden. Dieser ist ebenfalls in der Gelenkwelle 2 integriert oder an dieser angeordnet. Die Ansteuerung des Antriebes 18 erfolgt dabei als Funktion der Änderung der Beugewinkel β₁ und β₂ und damit des sich einstellenden Versatzwinkels γ, wobei die Ansteuerung erfolgen kann oder nicht. Damit ist es möglich, beliebig dimensionierte und ausgelegte Stellgetriebe 17 zu verwenden, da hier auf Grund des Fehlens der direkten Verbindung des Antriebes mit den Mittenteil-Teilelementen keine starre Kopplung zwischen dem tatsächlichen Versatzwinkel γ und der erforderlichen Verdrehbewegung der Enden des abtriebsseitigen Mittenteil-Teilelementes 38.2 besteht, sondern die Verdrehbewegung frei einstellbar ist. Zur Einstellung bzw. Ansteuerung des Stellgetriebes 17 ist eine Steuervorrichtung 42 vorgesehen. Diese umfaßt eine Steuereinrichtung 43, beispielsweise in Form eines Steuergerätes. Ferner sind Mittel 44 zur Erfassung mindestens einer, den Versatzwinkel γ wenigstens mittelbar charakterisierenden Größe bzw. der die Beugewinkel β₁ und β₂ wenigstens mittelbar bestimmenden Größen, gekoppelt. Vorzugsweise umfassen diese Mittel 44 mindestens zwei Sensoren 45 und 46, welche als Erfassungseinrichtungen für mindestens eine, die Änderung der Beugewinkel β₁ und β₂ wenigstens mittelbar charakterisierenden Größe, fungieren. Diese sind mit der Steuereinrichtung 43 gekoppelt. Ferner ist ein Stellgrößenbildner 47 vorgesehen, welcher der Zuordnung des sich ergebenden Versatzwinkels γ zu einer erforderlichen Verstellung am Ausgang 40 des Stellgetriebes 17 bestimmt und eine Stellgröße für den Antrieb 18 bildet. Dieser ist dann mit einer Stelleinrichtung 48 für den Antrieb 18 gekoppelt.

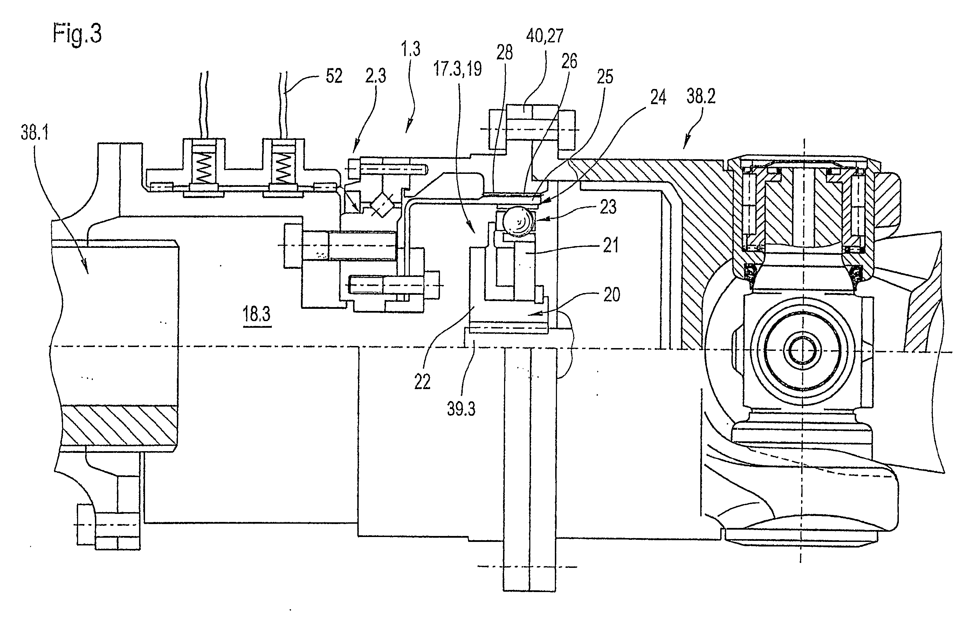

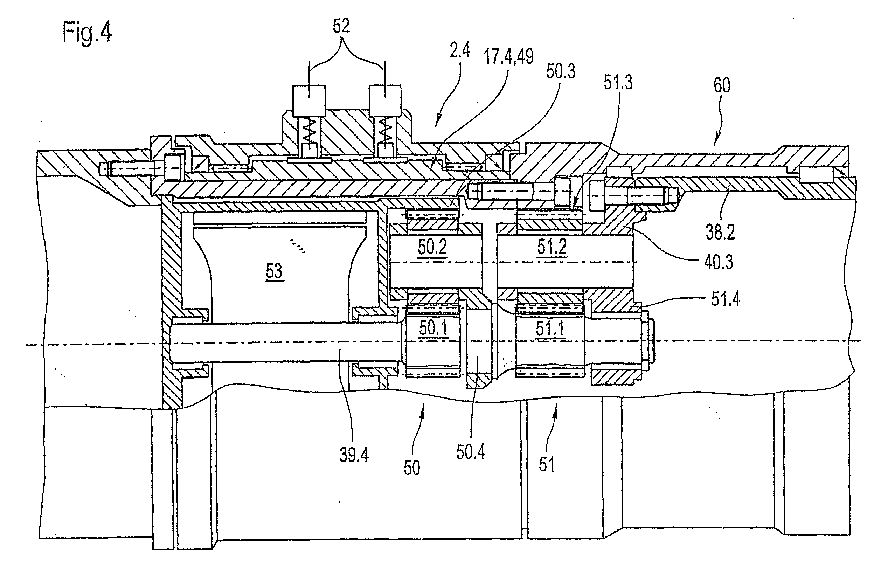

In den Figuren 3 bis 6 sind verschiedene Ausführungen eines Stellgetriebes 17 wiedergegeben, welche die Anforderungen für den Einsatz in Gelenkwellen 2 zum Antrieb von in Drehgestellen gelagerten Rädern in Schienenfahrzeugen erfüllen. Mit diesen soll eine Verstellung unter Drehmoment- und Betriebsdrehzahl, beispielsweise maximal 3000 Umdrehungen/min, vorgenommen werden können. Beim Längenausgleich werden gleichzeitig die Axialkräfte mit aufgenommen und der Durchmesser der Stellgetriebe 17 ist nicht oder nur geringfügig größer als der Durchmesser der Gelenkwelle 2 im Mittelteil 6. Die Stellgetriebe 17 bauen dabei relativ klein, die Massen sind gering. Zur Ansteuerung des Stellgetriebes 17 in den Figuren 3 und 4 ist eine Steuereinrichtung vorgesehen, welche die Differenzwinkel zwischen β1 und β2 in allen Betriebszuständen aufnimmt und in eine Stellgröße für den Antrieb 18 des Stellgetriebes 17 umsetzt.

Die Figur 3 verdeutlicht eine besonders vorteilhafte Ausgestaltung eines homokinetischen Antriebsstranges 1.3 in Form einer Gelenkwelle 2.3 mit einem Stellgetriebe 17.3 in Form eines Harmonic-Drive-Getriebes 19 anhand eines Ausschnittes aus dieser. Dieses besteht aus einem sogenannten Wave-Generator 20, unter welchem eine elliptische Stahlscheibe 21 mit zentrischer Nabe 22 und aufgezogenem, elliptisch verformbaren, Spezialkugellager 23 verstanden wird. Ferner umfaßt das Harmonic-Drive-Getriebe 19 ein zweites Bauelement 24, welches als Flexspline bezeichnet wird und unter dem eine zylindrische, verformbare Stahlbüchse 25 mit Außenverzahnung 26 verstanden wird. Dieses Bauelement 24 ist in einem zylindrischen Ring 27 mit Innenverzahnung 28 geführt., welche drehfest mit dem zweiten Mittenteil-Teilelement 38.2 verbunden ist. Die Innenverzahnung 28 kämmt dabei mit der Außenverzahnung 26 der zylindrischen Stahlbüchse 25. Das erste Bauelement in Form des Wave-Generators 20 ist dabei mit dem Antrieb 18.3 gekoppelt. Dieses verformt über das Kugellager 23 das zweite Bauelement 24, d. h. die Stahlbüchse 25 mit Außenverzahnung 26, welches sich in den gegenüberliegenden Bereichen der großen Ellipsenachse mit dem innen verzahnten fixierten zylindrischen Ring 27 in Eingriff befindet. Mit Drehen der elliptischen Stahlscheibe 21 verlagert sich die große Ellipsenachse und damit der Zahneingriffsbereich. Die Stahlbüchse 25 weist hinsichtlich der Außenverzahnung 26 wenigstens einen, vorzugsweise zwei oder mehrere Zähne weniger als der zylindrische Ring 27 bzw. dessen Innenverzahnung 28 auf. Aufgrund dieser Zahndifferenz vollzieht sich nach einer halben Umdrehung der elliptischen Stahlscheibe 21 eine Relativbewegung zwischen der Stahlbüchse 25 und dem zylindrischen Ring 27 um die Größe eines Zahnes und nach einer ganzen Umdrehung um die Größe beispielsweise zweier Zähne oder bei entsprechender Zahndifferenz der entsprechenden Anzahl an Zähnen. Bei fixiertem zylindrischen Ring 27 dreht sich die Stahlbüchse 25 als Abtriebselement entgegengesetzt zum Antrieb. Die elliptische Stahlscheibe 21 des ersten Bauelementes 20 ist dabei mit dem Antrieb 18.3 gekoppelt. Die Stahlbüchse 25 ist drehfest mit dem mit dem antriebsseitigen Kreuzgelenk 4.3 drehfest gekoppelten Element des Mittelteils - der Welle 15.3 oder Nabe 16.3 - verbunden, während der zylindrische Ring 27 drehfest mit dem abtriebsseitigen Kreuzgelenk 5.3 bzw. der mit diesem drehfest gekoppelten Elemente des Mittelteiles 6.3 - der Nabe 16.3 oder der Welle 15.3 - verbunden ist. Als Antrieb 18.3 fungiert im einfachsten Fall ein Elektromotor, welcher ebenfalls in der Gelenkwelle, insbesondere im Mittenteil 6.3, integriert ist. Die Stromversorgung erfolgt über an der Gelenkwelle 2.3 gelagerte Schleifkontakte 52. Der Rotor des Elektromotors ist dabei an einem der beiden Mittenteil-Teilelemente 38.1 oder 38.2 gelagert, vorzugsweise am nicht zu verdrillenden Mittenteil-Teilelement 38.1. Dies gilt auch für die Schleifkontakte 52. Lagerung bedeutet dabei Abstützung und nicht drehfeste Verbindung.

Die Figur 4 verdeutlicht eine weitere Ausgestaltung einer homokinetischen Gelenkwelle 2.4 mit einem Stellgetriebe 17.4 in Form eines Planetenradgetriebes 49. Diese kann beliebig ausgeführt sein, umfaßt vorzugsweise zwei miteinander gekoppelte Planetenradsätze 50 und 51. Der Eingang 39.4 des Stellgetriebes 17.4 wird dabei im dargestellten Fall beispielhaft vom Sonnenrad 50.1 des ersten Planetenradsatzes 50 gebildet, während der Ausgang vom Steg 51.4 des zweiten Planetenradsatzes 51 gebildet wird. Die einzelnen Elemente der Planetenradsätze sind dabei wie folgt bezeichnet: Die Sonnenräder mit 50.1 für den ersten Planetenradsatz und 51.1 für den zweiten Planetenradsatz; die Planetenräder mit 50.2 für den ersten und 51.2 für den zweiten Planetenradsatz; das Hohlrad mit 50.3 für den ersten Planetenradsatz 50 und 51.3 für den zweiten Planetenradsatz 51 und die Stege mit 50.4 für den ersten Planetenradsatz 50 und 51.4 für den zweiten Planetenradsatz 51. Die Kopplung des ersten Planetenradsatzes 50 erfolgt dabei über den Steg 50.4 mit dem Sonnenrad 51.1 des zweiten Planetenradsatzes 51. Andere Zuordnungsmöglichkeiten von Eingang 39.3 und Ausgang 40.3 zu den einzelnen Elementen der Planetenradsätze 50 und 51 sowie die Kopplung zwischen beiden Planetenradsätzen sind ebenfalls denkbar. Der Steg 51.4 ist dabei im dargestellten Fall drehfest mit dem zweiten Mittenteil-Teilelement 38.2 verbünden.

Auch für die in der Figur 4 dargestellte Ausführung wurde als Antrieb 18.4 ein elektrischer Antrieb verwendet. Die Leistungsversorgung erfolgt auch hier über an der Gelenkwelle 2.4, insbesondere am zweiten Mittenteil-Teilelement 38.2, gelagerte Schleifringe 52. Der Rotor 53 der elektrischen Maschine ist auch hier drehfest mit dem Eingang 39.4 verbunden. Dieser ist im dargestellten Fall an einem, sich am zweiten Mittenteil-Teilelement 38.2 abstützendem Element in Form einer Hülse 60 gelagert. Zwischen dieser und den Mittenteil-Teilelementen 38.1, 38.2 besteht keine drehfeste Kopplung.

Die in den Figuren 3 und 4 dargestellten möglichen besonders vorteilhaften Ausgestaltungen sind Beispiele. Die erfindungsgemäße Lösung ist keineswegs auf diese Ausführungen beschränkt. Zur Ansteuerung der elektrischen Maschine, d. h. des Antriebes 18, ist beiden Lösungen eine Steuervorrichtung 42 entsprechend Figur 1 zugeordnet. Auf die Darstellung dieser wurde verzichtet. Ferner besteht die Möglichkeit, den Antrieb 18 in Form der elektrischen Maschine durch andere Antriebskonzepte zu ersetzen, beispielsweise hydrostatische Antriebseinheiten oder Hydromotoren, welche wiederum über verschiedene Antriebskonzepte angetrieben werden können. Die Lagerung der Leistungsversorgung erfolgt an der Gelenkwelle 2 selbst. Bei beiden Lösungen ist der Antrieb koaxial zum Eingang 39 angeordnet. Die rotatorische Antriebsbewegung wird in eine entsprechende Verdrehbewegung in Umfangsrichtung umgewandelt.

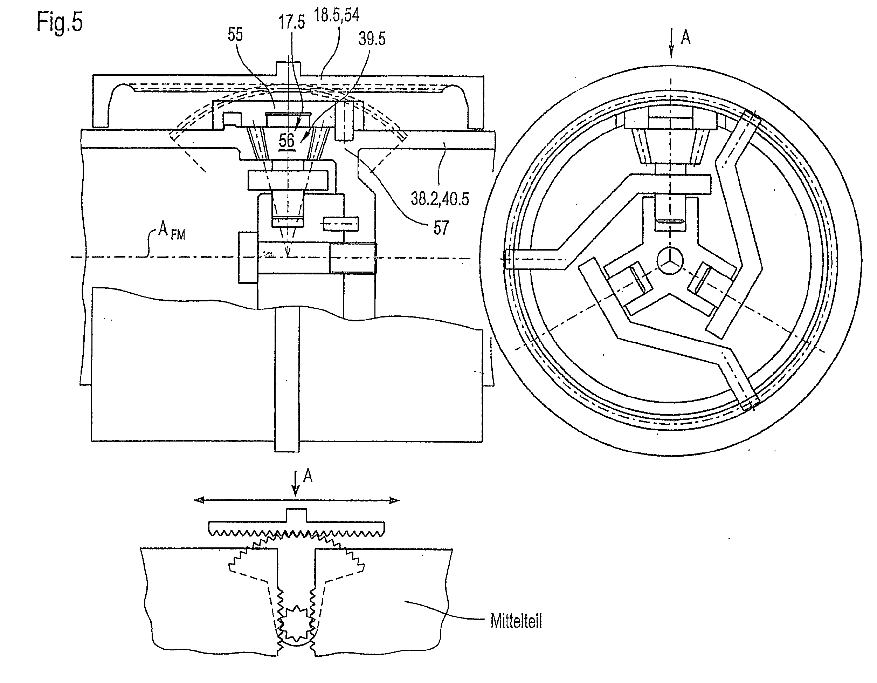

Die Figur 5 verdeutlicht eine weitere Ausführung einer homokinetischen Gelenkwelle 2.5 mit der Möglichkeit eines freien Ausgleiches des Versatzwinkels γ durch die Ausbildung des Stellgetriebes 17.5 als Koppelgetriebe zur Umwandlung einer Relativbewegung der Längsbewegung, d.h. Bewegung in axialer Richtung in eine Drehbewegung in Umfangsrichtung in zwei Ansichten.

Das Stellgetriebe 17.5 umfaßt dazu auch je einen Antrieb 18.5, welcher von einer innenverzahnten Hülse 54 gebildet wird, welche die Funktion einer Zahnstange übernimmt. Die Verzahnung dieser kämmt mit einem senkrecht zu diesem gelagerten Rad 55, welches mit einem Kegelrad 56 gekoppelt ist, und dem Eingang 39.5 des Stellgetriebes 17.5. Das Kegelrad 56 kämmt dabei mit einem koaxial zur Mittenachse A_{FM} ausgerichteten Kegelrad 57, welches mit dem Mittenteil-Teilelement 38.2 drehfest verbunden ist. Das Kegelrad 57 beziehungsweise ein drehfest mit diesem gekoppeltes Element bildet dabei den Ausgang 40.5 des Stellgetriebes 17.5. Der Eingang 39.5 wird dabei vom Rad 55 gebildet.

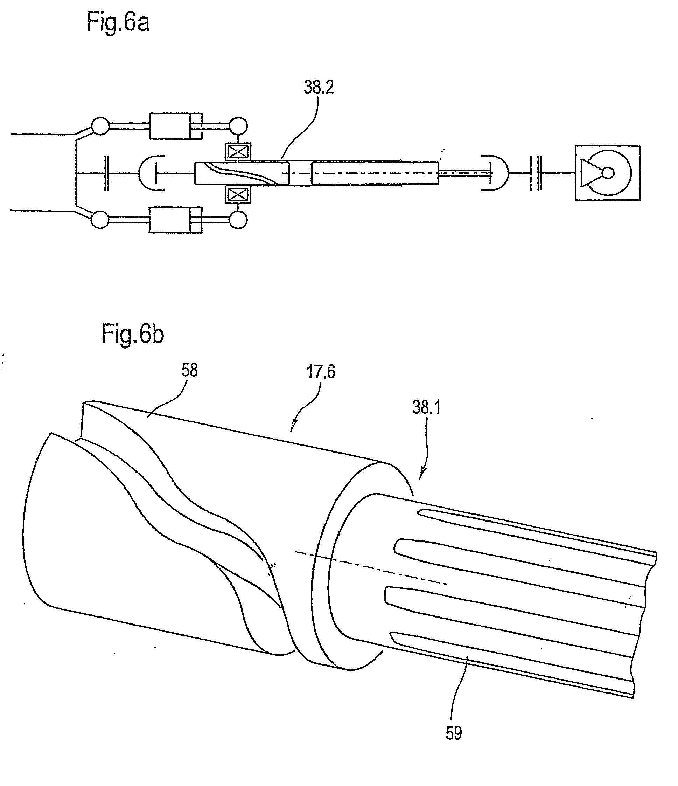

Die Figuren 6a und 6b verdeutlichen in schematisch vereinfachter Darstellung anhand einer Gesamtansicht und eines Ausschnittes auf das Mittenteil-Teilelement 38.2 eine weitere Ausführung einer homokinetischen Gelenkwelle 2.6. Das Stellgetriebe 17.6 ist als Kurvengetriebe ausgeführt. Dieses umfaßt eine am Mittenteil-Teilelement 38.1 gelagerte Kulisse 58, in welcher mindestens ein dazu komplementärer Vorsprung, welcher an einem mit dem zweiten Mittenteil-Teilelement 38.2 drehfest verbundenem Element in Form einer Hülse angeordnet ist, geführt wird. Die Form der Kulisse ist derart ausgeführt, daß Verschiebungen zwischen der Hülse und dem zweiten Mittenteil 38.2 in axialer Richtung in geringem Maß zu keiner Verdrehung des zweiten Mittenteil-Teilelementes in Umfangrichtung führen, während die Verschiebungen, welche durch Kurvenfahrt bedingt sind, und eine Änderung der Beugewinkel zur Folge haben, sehr wohl zur Verdrehung des zweiten Mittenteil-Teilelementes in Umfangsrichtung führen.

### Bezugszeichenliste

- 1, 1.3: homokinetischer Antriebsstrang
- 2, 2.3: Gelenkwelle
- 3: Antrieb
- 4: erstes Kreuzgelenk
- 5: zweites Kreuzgelenk
- 6: Mittenteil
- 7: erste Gelenkgabel
- 8: zweite Gelenkgabel
- 9: erste Gelenkgabel
- 10: zweite Gelenkgabel
- 11: Zapfenkreuz
- 12: Zapfenkreuz
- 13: Flansch
- 14: Antriebsflansch
- 15, 15.3: Welle
- 16, 16.3: Nabe
- 17; 17.3, 17.4 17.5, 17.6: Stellgetriebe
- 18, 18.3, 18.4 18.5, 18.6: Antrieb
- 19: Harmonic-Drive-Getriebe
- 20: Wave-Generator
- 21: elliptische Stahlscheibe
- 22: zentrische Nabe
- 23: Kugellager
- 24: zweites Bauelement
- 25: Stahlbüchse
- 26: Außenverzahnung
- 27: zylindrischer Ring
- 28: Innenverzahnung
- 29: Drehgestell
- 30: Räder
- 31: Schienenfahrzeug
- 32: Antriebsstrang
- 33: Dieselmotor
- 34: Getriebe
- 35: Ausgang
- 36: Radantriebswelle
- 37: Radsatzgetriebe
- 38.1, 38.2: Mittenteil-Teilelemente
- 39, 39.3, 39.4: Eingang
- 40: Ausgang
- 41: Welle-Nabe-Verbindung
- 42: Steuervorrichtung
- 43: Steuereinrichtung
- 44: Mittel zur Erfassung wenigstens einer, den Versatzwinkel γ wenigstens mittelbar charakterisierenden Größe
- 45, 46: Erfassungseinrichtung
- 47: Stellgrößenbildner
- 48: Stelleinrichtung
- 49: Planetenradgetriebe
- 50: Planetenradsatz
- 50.1, 51.1: Sonnenrad
- 50.2, 51.2: Planetenrad
- 50.3, 51.3: Hohlrad
- 50.4, 51.4: Steg
- 51: Planetenradsatz
- 52: Schleifkontakt
- 53: Rotor
- 54: Hülse
- 55: Stirnrad
- 56: Kegelrad
- 57: Kegelrad
- 58: Kulisse
- 59: Keilverzahnung
- 60: Hülse
- E₁, E₂: Ebene
- Z₁₋₁₁, Z₂₋₁₁: Zapfenachsen der der Zapfen des im ersten Kreuzgelenk 4 gelagerten Zapfenkreuzes
- Z₁₋₁₂, Z₂₋₁₂: Zapfenachsen der Zapfen des im zweiten Kreuzgelenk 5 gelagerten Zapfenkreuzes

## Patentansprüche

1. Wellenstrang, insbesondere Gelenkwelle (2)
1.1 mit zwei Kreuzgelenken (4, 5), umfassend jeweils zwei Gelenkgabeln (7, 8, 9, 10), die über ein Mittenteil (6) miteinander gekoppelt sind;
1.2 das Mittenteil (6) umfaßt mindestens zwei Mittenteil-Teilelemente (38.1, 38.2), ein erstes Mittenteil-Teilelement und ein zweites Mittenteil-Teilelement, die über eine Welle-Nabe-Verbindung in Umfangsrichtung miteinander drehfest und in axialer Richtung verschiebbar verbunden sind; **gekennzeichnet durch** folgende Merkmale:
1.3 mit einem dem Mittenteil (6) zugeordneten Stellgetriebe (17; 17.3; 17.4; 17.5; 17.6) zur Realisierung einer Verdrehbewegung des mit dem Kreuzgelenk (4, 5) gekoppelten Endbereiches eines der beiden Mittelteil-Teilelemente (38.1, 38.2) in Umfangsrichtung gegenüber der Welle-Nabe-Verbindung dieses mit dem anderen Mittenteil-Teilelement (38.1, 38.2).

2. Wellenstrang (2) nach Anspruch 1, **dadurch gekennzeichnet, daß** das erste Mittenteil-Teilelement (38.1) die Welle und das zweite Mittenteil-Teilelement (38.2) die Nabe bildet oder umgekehrt.

3. Wellenstrang (2) nach Anspruch 1 oder 2, **dadurch gekennzeichnet, daß** die Welle-Nabe-Verbindung in Form einer Keilwellenverbindung ausgeführt ist.

4. Wellenstrang (2) nach einem der Ansprüche 1 bis 3, **dadurch gekennzeichnet, daß** wenigstens ein Antrieb (18; 18.3; 18.4; 18.5; 18.6) vorgesehen ist, der mit dem Stellgetriebe (17; 17.3; 17.4; 17.5; 17.6) verbunden ist.

5. Wellenstrang (2) nach einem der Ansprüche 1 bis 4, **gekennzeichnet durch** das Stellgetriebe (17; 17.3; 17.4; 17.5; 17.6) umfaßt wenigstens einen Eingang (39; 39.3; 39.4; 39.5; 39.6) und einen Ausgang (40; 40.3; 40.4; 40.5; 40.6);
5.1 der Ausgang (40; 40.3; 40.4; 40.5; 40.6) ist mit einem Mittenteil-Teilelement (38.1, 38.2) drehfest verbunden;
5.2 der Eingang (39; 39.3; 39.4; 39.5; 39.6) ist an diesem Mittenteil-Teilelement (38.1, 38.2) oder dem anderen Mittenteil-Teilelement (38.2, 38.1) frei von einer drehfesten Kopplung in diesem wenigstens indirekt, d.h. direkt oder über ein weiteres Element gelagert.

6. Wellenstrang (2) nach Anspruch 5, **dadurch gekennzeichnet, daß** der Eingang des Stellgetriebes (17; 17.3; 17.4) koaxial oder parallel zum Ausgang (40; 40.3; 40.4) des Stellgetriebes (17; 17.3; 17.4) angeordnet ist.

7. Wellenstrang nach Anspruch 5, **dadurch gekennzeichnet, daß** der Eingang des Stellgetriebes (17; 17.5; 17.6) in einem Winkel zum Ausgang (40; 40.5; 40.6) angeordnet ist.

8. Wellenstrang (2) nach einem der Ansprüche 5 bis 7, **dadurch gekennzeichnet, daß** der Antrieb (18; 18.3; 18.4) und der Eingang (39; 39.3; 39.4) des Stellgetriebes (17; 17.3; 17.4) koaxial zueinander angeordnet sind.

9. Wellenstrang (2) nach einem der Ansprüche 5 bis 7, **dadurch gekennzeichnet, daß** der Antrieb (18.5; 18.6) in einem Winkel zum Eingang (39; 39.5; 39.6) des Stellgetriebes (17; 17.5; 17.6) angeordnet ist.

10. Wellenstrang (2) nach einem der Ansprüche 1 bis 9, **dadurch gekennzeichnet, daß** der Antrieb (18.3; 18.4) von einem Elektromotor gebildet wird.

11. Wellenstrang (2) nach Anspruch 10, **dadurch gekennzeichnet, daß** der Rotor (53) des Elektromotors im Mittenteil (6) integriert ist und die Leistungsversorgung über an der Gelenkwelle (2) gelagerte Schleifkontakte (52) erfolgt.

12. Wellenstrang (2) nach einem der Ansprüche 4 bis 9, **dadurch gekennzeichnet, daß** der Antrieb von einem hydrostatischen Stellmotor gebildet wird.

13. Wellenstrang (2) nach einem der Ansprüche 1 bis 9, **dadurch gekennzeichnet, daß** der Antrieb von einem pneumatischen Stellmotor gebildet wird.

14. Wellenstrang (2) nach einem der Ansprüche 10 bis 13, **dadurch gekennzeichnet, daß** der Antrieb ferner eine verschiebbare Hülse umfaßt, die mit den Stellmotoren gekoppelt ist und mit dem Eingang (39.5; 39.6) des Stellgetriebes (17.5; 17.6) gekoppelt ist.

15. Wellenstrang (2) nach einem der Ansprüche 5 bis 14, **dadurch gekennzeichnet, daß** der Eingang (39; 39.4; 39.4) des Stellgetriebes parallel oder koaxial zur Mittenachse A_{FM} der Gelenkwelle (2) angeordnet ist.

16. Wellenstrang (2) nach einem der Ansprüche 1 bis 15, **dadurch gekennzeichnet, daß** das Stellgetriebe (17; 17.3; 17.4) als Koppelgetriebe ausgeführt ist, welches eine Drehbewegung mit Übersetzung trägt.

17. Wellenstrang nach Anspruch 16, **gekennzeichnet durch** die folgenden Merkmale:
17.1 das Stellgetriebe (17.4) umfaßt ein Planetenradgetriebe (49) mit mindestens zwei Planetenradsätzen (50, 51);
17.2 ein erstes Element des ersten Planetenradsatzes (50) ist mit dem Antrieb (18.4) drehfest verbunden, ein Element des zweiten Planetenradsatzes (51) ist mit dem Ausgang (40.4) drehfest verbunden.

18. Wellenstrang nach Anspruch 17, **dadurch gekennzeichnet, daß**
18.1 das erste Element des ersten Planetenradsatzes (50) vom Sonnenrad (50.1) und das mit dem Ausgang (40) drehfest gekoppelte Element des zweiten Planetenradsatzes (51) vom Steg (51.4) gebildet wird;
18.2 die Hohlräder (50.3, 51.3) sind drehfest in einer Hülse (54) gelagert;
18.3 der Steg (50.4) des ersten Planetenradsatzes (50) ist mit dem Sonnenrad (51.1) des zweiten Planetenradsatzes (51) drehfest verbunden.

19. Wellenstrang (2) nach Anspruch 16, **gekennzeichnet durch** die folgenden Merkmale:
19.1 das Stellgetriebe (17.3) umfaßt ein elliptisches Scheibenelement (21) mit zentrischer Nabe (22) und aufgezogenem elliptisch verformbarem Spezialkugellager (23) sowie ein zylindrisch verformbares büchsenartiges Element (25) mit Außenverzahnung (26), welches mit einem zylindrisch ausgebildeten ringförmigen Element (27) mit Innenverzahnung (28) in Eingriff steht;
19.2 der Eingang (39.3) des Stellgetriebes (17.3) wird vom elliptischen scheibenförmigen Element (21) mit zentrischer Nabe (22) gebildet;
19.3 das zylindrische ringförmige Element (27) mit Innenverzahnung (28) bildet den Ausgang (40.3) des Stellgetriebes (17.3);
19.4 zwischen der Innenverzahnung (28) und der Außenverzahnung (26) besteht eine Verzahnungsdifferenz von X, mit X > 0 bis einschließlich maximal 10.

20. Wellenstrang (2) nach einem der Ansprüche 1 bis 15, **dadurch gekennzeichnet, daß** das Stellgetriebe (17.5; 17.6) als Koppelgetriebe ausgeführt ist, welches eine Längsbewegung in eine Drehbewegung umwandelt.

21. Wellenstrang (2) nach Anspruch 20, **dadurch gekennzeichnet, daß**
21.1 das Stellgetriebe als Kurvengetriebe ausgeführt ist, wobei dieses eine schraubenförmige Kulisse umfaßt, in welchem eine Spindel geführt wird;
21.2 die Spindel ist drehfest mit dem zweiten Mittenteil-Teilelement gekoppelt.

22. Wellenstrang (2) nach Anspruch 20, **dadurch gekennzeichnet, daß** der Antrieb eine axial verschiebbare Hülse umfaßt, welche mit einem rechtwinklig zu diesem gelagerten Stirnrad kämmt, das drehfest mit einem Kegelradsatz gekoppelt ist, dessen Ausgang koaxial oder parallel zur Mittenachse des abtriebsseitigen Mittenteil-Teilelementes angeordnet ist.

23. Antriebsstrang (32) für Schienenfahrzeuge (31), insbesondere zum Antrieb von in Drehgestellen (29) gelagerten Rädern (30);
23.1 mit einer Antriebsmaschine (33), welche mit einer Getriebebaueinheit (34) gekoppelt ist;
23.2 mit einem im Drehgestell (29) gelagerten Radsatzgetriebe (37), dessen Abtrieb (35) mit den Radantriebswellen (36) drehfest verbunden ist;
23.3 das Radsatzgetriebe (37) ist mit der Getriebebaueinheit über wenigstens einen Wellenstrang (2) gemäß einem der Ansprüche 1 bis 22 drehfest verbunden.

24. Antriebsstrang (32) nach Anspruch 23, **dadurch gekennzeichnet, daß** dem Wellenstrang (2) eine Steuervorrichtung (42) zugeordnet ist, umfassend eine Steuereinrichtung (41), Mitteln (44, 45, 46) zur Erfassung wenigstens einer, den Versatzwinkel wenigstens mittelbar charakterisierenden Größe und einen Stellgrößenbildner (47), welcher mit dem Antrieb (18) verbunden ist.

## Claims

1. Shafting, in particular a cardan shaft (2),
1.1 with two cardan joints (4, 5), each comprising two joint forks (7, 8, 9, 10), which are coupled together via a central element (6);
1.2 the central element (6) comprises at least two central element portions (38.1, 38.2), a first central element portion and a second central element portion, that are connected together in a rotation-fast manner via a shaft-hub-connection in circumferential direction and so as to be displaceable in axial direction,
**characterised by** the following features:
1.3 with an actuating gear (17; 17.3; 17.4; 17.5; 17.6) allocated to the central element (6) for performing a rotational movement of the end region coupled with the cardan joint (4, 5) of one of the two central element portions (38.1. 38.2) in circumferential direction opposite the shaft-hub-connection thereof with the other central element portion (38.1, 38.2).

2. Shafting (2) according to claim 1, **characterised in that** the first central element portion (38.1) forms the shaft and the second central element portion (38.2) forms the hub, or vice versa.

3. Shafting (2) according to claim 1 or 2, **characterised in that** the shaft-hub-connection is in the form of a spline shaft connection.

4. Shafting (2) according to one of claims 1 to 3, **characterised in that** at least one drive (18; 18.3; 18,4; 18.5; 18.6) is provided which is connected with the actuating gear (17; 17.3; 17.4; 17.5; 17.6).

5. Shafting (2) according to one of claims 1 to 4, **characterised in that** the actuating gear (17; 17.3; 17.4; 17.5; 17.6) comprises at least one input (39; 39.3; 39.4; 39.5; 39.6) and one output (40; 40.3; 40.4; 40.5; 40.6);
5.1 the output (40; 40.3; 40.4; 40.5; 40.6) is connected in a rotation-fast manner with a central element portion (38.1, 38.2);
5.2 the input (39; 39.3; 39.4; 39.5; 39.6) is mounted on this central element portion (38.1, 38.2) or the other central element portion (38.2, 38.1) free of a rotation-fast coupling therein at least indirectly, i.e. directly or via another element.

6. Shafting (2) according to claim 5, **characterised in that** the input of the actuating gear (17; 17.3; 17.4) is arranged coaxially or parallel to the output (40; 40.3; 40.4) of the actuating gear (17; 17.3; 17.4).

7. Shafting (2) according to claim 5, **characterised in that** the input of the actuating gear (17; 17.5; 17.6) is arranged at an angle to the output (40; 40.5; 40.6).

8. Shafting (2) according to one of claims 5 to 7, **characterised in that** the drive (18; 18.3; 18.4) and the input (39; 39.3; 39.4) of the actuating gear (17; 17.3; 17.4) are arranged to be coaxial to each other.

9. Shafting (2) according to one of claims 5 to 7, **characterised in that** the drive (18.5; 18.6) is arranged at an angle to the input (39; 39.5; 39.6) of the actuating gear (17; 17.5; 17.6).

10. Shafting (2) according to one of claims 1 to 9, **characterised in that** the drive (18.3; 18.4) is formed by an electric motor.

11. Shafting (2) according to claim 10, **characterised in that** the rotor (53) of the electric motor is integrated into the central element (6), and the power is supplied via sliding contacts (52) mounted on the cardan shaft (2).

12. Shafting (2) according to one of claims 4 to 9, **characterised in that** the drive is in the form of a hydrostatic servomotor.

13. Shafting (2) according to one of claims 1 to 9, **characterised in that** the drive is in the form of a pneumatic servomotor.

14. Shafting (2) according to one of claims 10 to 13, **characterised in that** the drive also comprises a displaceable sleeve, which is coupled with the servomotors and with the input (39.5; 39.6) of the actuating gear (17.5; 17.6).

15. Shafting (2) according to one of claims 5 to 14, **characterised in that** the input (39; 39.3; 39.4) of the actuating gear is arranged parallel or coaxial to the central axis A_{FM} of the cardan shaft (2).

16. Shafting (2) according to one of claims 1 to 15, **characterised in that** the actuating gear (17; 17.3; 17.4) is designed as a linkage, which supports a rotational movement with transmission.

17. Shafting according to claim 16, **characterised by** the following features:
17.1 the actuating gear (17.4) comprises a planetary gearing (49) with at least two planetary gear sets (50, 51);
17.2 a first element of the first planetary gear set (50) is connected in a rotation-fast manner with the drive (18.4), an element of the second planetary gear set (51) is connected in a rotation-fast manner with the output (40.4).

18. Shafting according to claim 17, **characterised in that**
18.1 the first element of the first planetary gear set (50) is formed by a sun gear (50.1) and the element of the second planetary gear set (51) coupled in a rotation-fast manner with the output (40) is formed by a web (51.4);
18.2 the internal gears (50.3, 51.3) are mounted in a rotation-fast manner in a sleeve (54);
18.3 the web (50.4) of the first planetary gear set (50) is connected in a rotation-fast manner with the sun gear (51.1) of the second planetary gear set (51).

19. Shafting (2) according to claim 16, **characterised by** the following features:
19.1 the actuating gear (17.3) comprises an elliptic disc element (21) with a central hub (22) and special ball bearing (23) that is elliptically deformable, as well as a cylindrically deformable bush-like element (25) with external teeth (26), which meshes with a cylindrically designed annular element (27) with inner teeth (28);
19.2 the input (39.3) of the actuating gear (17.3) is formed by an elliptic disc-shaped element (21) with a central hub (22);
19.3 the cylindrical, annular element (27) with inner teeth (28) forms the output (40.3) of the actuating gear (17.3).
19.4 between the internal teeth (28) and the external teeth (26) there is a tooth difference of X, with X > 0 up to and including a maximum of 10.

20. Shafting (2) according to one of claims 1 to 15, **characterised in that** the actuating gear (17.5; 17.6) is in the form of a linkage, which converts a longitudinal movement into a rotational one.

21. Shafting (2) according to claim 20, **characterised in that**
21.1 the actuating gear is in the form of a cam mechanism, whereby the latter comprises a helical link, into which a spindle is inserted;
21.2 the spindle is coupled in a rotation-fast manner with the second central element portion.

22. Shafting (2) according to claim 20, **characterised in that** the drive comprises an axially displaceable sleeve, which meshes with a spur gear mounted at right angles thereto, which is coupled in a rotation-fast manner with a bevel gear set, the output of which is arranged coaxially or parallel to the central axis of the output-side central element portion.

23. Power train (32) for rail cars (31), in particular for driving wheels (30) mounted in bogie drive systems (29);
23.1 with a drive engine (33), which is coupled with a gearing unit (34);
23.2 with a wheel set gearing (37) mounted in a bogie drive system (29), the output (35) of which is connected in a rotation-fast manner with the gear drive shafts (36);
23.3 the wheel set gearing (37) is connected in a rotation-fast manner with the gear unit via at least one shafting (2) according to one of claims 1 to 22.

24. Power train (32) according to claim 23, **characterised in that** the shafting (2) is allocated a control mechanism (42), comprising a control device (41), means (44, 45, 46) for detecting at least one of the variables characterizing the offset angle at least indirectly, and a manipulated variable creator (47), which is connected with the drive (18).

## Revendications

1. Ligne d'arbres, notamment d'arbre de transmission (2)
1.1 avec deux joints de cardan (4, 5), comprenant respectivement deux fourches articulées (7, 8, 9, 10) couplées entre elles via une pièce centrale (6) ;
1.2 la pièce centrale (6) comprend au moins deux éléments partiels de pièce centrale (38.1, 38.2), un premier élément partiel de pièce centrale et un deuxième élément partiel de pièce centrale, reliés de façon résistante à la torsion entre eux via une liaison arbre-moyeu dans la direction périphérique et de façon à pouvoir être déplacés dans la direction axiale ;
**caractérisée par** les caractéristiques suivantes :
1.3 un engrenage de réglage (17 ; 17.3 ; 17.4 ; 17.5 ; 17.6) associé à la pièce centrale (6) pour réaliser un mouvement de torsion de la zone terminale d'un des deux éléments partiels de partie centrale (38.1, 38.2) couplée au joint de cardan (4, 5) dans la direction périphérique par rapport à la liaison arbre-moyeu entre celui-ci et l'autre élément partiel de pièce centrale (38.1, 38.2).

2. Ligne d'arbres (2) selon la revendication 1, **caractérisée en ce que** le premier élément partiel de pièce centrale (38.1) forme l'arbre et **en ce que** le deuxième élément partiel de pièce centrale (38.2) forme le moyeu ou inversement.

3. Ligne d'arbres (2) selon la revendication 1 ou 2, **caractérisée en ce que** la liaison arbre-moyeu prend la forme d'une liaison d'arbre cannelé.

4. Ligne d'arbres (2) selon l'une quelconque des revendications 1 à 3, **caractérisée en ce qu'**au moins un entraînement (18 ; 18.3 ; 18.4 ; 18.5 ; 18.6) relié à l'engrenage de réglage (17 ; 17.3 ; 17.4 ; 17.5 ; 17.6) est prévu.

5. Ligne d'arbres (2) selon l'une quelconque des revendications 1 à 4, **caractérisée en ce que** l'engrenage de réglage (17 ; 17.3 ; 17.4 ; 17.5 ; 17.6) comprend au moins une entrée (39 ; 39.3 ; 39.4 ; 39.5 ; 39.6) et une sortie (40 ; 40.3 ; 40.4 ; 40.5 ; 40.6) ;
5.1 la sortie (40 ; 40.3 ; 40.4 ; 40.5 ; 40.6) est reliée de façon résistante à la torsion à un élément partiel de pièce centrale (38.1, 38.2) ;
5.2 l'entrée (39 ; 39.3 ; 39.4 ; 39.5 ; 39.6) est disposée sur cet élément partiel de pièce centrale (38.1, 38.2) ou sur l'autre élément partiel de pièce centrale (38.2, 38.1) dépourvu de couplage résistant à la torsion au moins indirectement, c'est-à-dire directement ou via un autre élément.

6. Ligne d'arbres (2) selon la revendication 5, **caractérisée en ce que** l'entrée de l'engrenage de réglage (17 ; 17.3 ; 17.4) est disposée coaxialement ou parallèlement par rapport à la sortie (40 ; 40.3 ; 40.4) de l'engrenage de réglage (17 ; 17.3 ; 17.4).

7. Ligne d'arbres selon la revendication 5, **caractérisée en ce que** l'entrée de l'engrenage de réglage (17 ; 17.5 ; 17.6) est disposée selon un certain angle par rapport à la sortie (40 ; 40.5 ; 40.6).

8. Ligne d'arbres (2) selon l'une quelconque des revendications 5 à 7, **caractérisée en ce que** l'entraînement (18 ; 18.3 ; 18.4) et l'entrée (39 ; 39.3 ; 39.4) de l'engrenage de réglage (17 ; 17.3 ; 17.4) sont disposés coaxialement l'un par rapport à l'autre.

9. Ligne d'arbres (2) selon l'une quelconque des revendications 5 à 7, **caractérisée en ce que** l'entraînement (18.5 ; 18.6) est disposé selon un certain angle par rapport à l'entrée (39 ; 39.5 ; 39.6) de l'engrenage de réglage (17 ; 17.5 ; 17.6).

10. Ligne d'arbres (2) selon l'une quelconque des revendications 1 à 9, **caractérisée en ce que** l'entraînement (18.3 ; 18.4) est formé par un moteur électrique.

11. Ligne d'arbres (2) selon la revendication 10, **caractérisée en ce que** le rotor (53) du moteur électrique est intégré dans la pièce centrale (6) et **en ce que** l'alimentation en puissance se fait via des contacts frottants (52) disposés sur l'arbre de transmission (2).

12. Ligne d'arbres (2) selon l'une quelconque des revendications 4 à 9, **caractérisée en ce que** l'entraînement est formé par un servomoteur hydrostatique.

13. Ligne d'arbres (2) selon l'une quelconque des revendications 1 à 9, **caractérisée en ce que** l'entraînement est formé par un servomoteur pneumatique.

14. Ligne d'arbres (2) selon l'une quelconque des revendications 10 à 13, **caractérisée en ce que** l'entraînement comprend en outre un fourreau déplaçable couplé aux moteurs de commande et à l'entrée (39.5 ; 39.6) de l'engrenage de réglage (17.5 ; 17.6).

15. Ligne d'arbres (2) selon l'une quelconque des revendications 5 à 14, **caractérisée en ce que** l'entrée (39 ; 39.4 ; 39.4) de l'engrenage de réglage est disposée parallèlement ou coaxialement par rapport à l'axe central A_{FM} de l'arbre de transmission (2).

16. Ligne d'arbres (2) selon l'une quelconque des revendications 1 à 15, **caractérisée en ce que** l'engrenage de réglage (17 ; 17.3 ; 17.4) prend la forme d'un engrenage couplé supportant un mouvement de rotation avec démultiplication.

17. Ligne d'arbres selon la revendication 16, **caractérisée par** les caractéristiques suivantes :
17.1 l'engrenage de réglage (17.4) comprend un engrenage à pignons planétaires (49) muni d'au moins deux trains de pignons planétaires (50, 51) ;
17.2 un premier élément du premier train de pignons planétaires (50) est relié à l'entraînement (18.4) de façon résistante à la torsion, un élément du deuxième train de pignons planétaires (51) est relié à la sortie (40.4) de façon résistante à la torsion.

18. Ligne d'arbres selon la revendication 17, **caractérisée en ce que**
18.1 le premier élément du premier train de pignons (50) est formé par la roue solaire (50.1) et l'élément du deuxième train de pignons (51) couplé de façon résistante à la torsion à la sortie (40) est formé par le segment (51.4) ;
18.2 les roues creuses (50.3, 51.3) sont disposées de façon résistante à la torsion dans un fourreau (54) ;
18.3 le segment (50.4) du premier train de pignons (50) est relié de façon résistante à la torsion à la roue solaire (51.1) du deuxième train de pignons (51).

19. Ligne d'arbres (2) selon la revendication 16, **caractérisée par** les caractéristiques suivantes :
19.1 l'engrenage de réglage (17.3) comprend un élément à disque elliptique (21) muni d'un moyeu central (22) et un roulement à billes (23) spécial remonté déformable de façon elliptique ainsi qu'un élément de type douille (25) déformable cylindriquement muni d'une denture extérieure (26) engrenant avec un élément annulaire (27) de forme cylindrique muni d'une denture intérieure (28) ;
19.2 l'entrée (39.3) de l'engrenage de réglage (17.3) est formée par un élément en forme de disque elliptique (21) muni d'un moyeu central (22) ;
19.3 l'élément annulaire cylindrique (27) à denture intérieure (28) forme la sortie (40.3) de l'engrenage de réglage (17.3) ;
19.4 il y a une différence de X dans la denture entre la denture intérieure (28) et la denture extérieure (26), X correspondant à un rapport de 0 à 10 maximum inclus.

20. Ligne d'arbres (2) selon l'une quelconque des revendications 1 à 15, **caractérisée en ce que** l'engrenage de réglage (17.5 ; 17.6) prend la forme d'un engrenage couplé convertissant un mouvement longitudinal en mouvement de rotation.

21. Ligne d'arbres (2) selon la revendication 20, **caractérisée en ce que** :
21.1 l'engrenage de réglage prend la forme d'un engrenage à cames, celui-ci comprenant un coulisseau en forme de vis dans lequel une broche est introduite ;
21.2 la broche est couplée de façon résistante à la torsion au deuxième élément partiel de pièce centrale.

22. Ligne d'arbres (2) selon la revendication 20, **caractérisée en ce que** l'entraînement comprend un fourreau déplaçable dans le plan axial engrenant avec une roue droite disposée à angle droit par rapport à celui-ci et couplée de façon résistante à la torsion à un train de pignon conique dont la sortie est disposée coaxialement ou parallèlement par rapport à l'axe central de l'élément partiel de pièce centrale situé du côté de l'entraînement de sortie.

23. Ligne d'entraînement (32) pour véhicules ferroviaires (31), notamment pour l'entraînement de pignons (30) disposés dans des bogies (29) ;
23.1 avec un moteur d'entraînement (33) couplé à une unité modulaire de boîte de vitesses (34) ;
23.2 avec un engrenage de trains de pignons (37) disposé dans le bogie (29) dont l'entraînement de sortie (35) est relié de façon résistante à la torsion aux arbres d'entraînement de roue (36) ;
23.3 l'engrenage de trains de pignons (37) est relié de façon résistante à la torsion à l'unité modulaire de boîte de vitesses via au moins une ligne d'arbres (2) selon l'une quelconque des revendications 1 à 22.

24. Ligne d'entraînement (32) selon la revendication 23, **caractérisée en ce qu'**un dispositif de commande (42) est associé à la ligne d'arbres (2), lequel comprend un appareil de commande (41), des moyens (44, 45, 46) de détection d'au moins une grandeur caractérisant de façon indirecte au moins l'angle de décalage et un dispositif de détermination de grandeur de réglage (47) relié à l'entraînement (18).
